# FASCICULE DE BREVET EUROPEEN

(11) **EP 4 665 622 B1**
(45) Date de publication et mention de la délivrance du brevet: **16.09.2026**
(21) Numéro de dépôt: 24703595.9
(22) Date de dépôt: 11.01.2024
(51) Int. Cl.: B60W 20/40, B60W 10/02, B60W 10/06, B60W 10/08, B60W 30/188, B60K 6/48, B60K 6/387

(54) **PROCÉDÉ DE COMMANDE DU DÉMARRAGE D'UN MOTEUR THERMIQUE DANS UN VÉHICULE EQUIPÉ D'UNE TRANSMISSION HYBRIDE**
VERFAHREN ZUR STEUERUNG DES STARTS EINES VERBRENNUNGSMOTORS IN EINEM FAHRZEUG MIT HYBRIDGETRIEBE
METHOD FOR CONTROLLING THE STARTING OF A COMBUSTION ENGINE IN A VEHICLE EQUIPPED WITH A HYBRID TRANSMISSION

(30) Priorité: 14.02.2023 FR 2301355
(43) Date de publication de la demande: 24.12.2025
(73) Titulaire: Stellantis Auto SAS, 78300 Poissy (FR)
(72) Inventeur: HABBANI, Ridouane, 92600 ASNIERES SUR SEINE (FR); LAUNAY, Cedric, 78680 EPONE (FR); MILHAU, Yohan, 78630 ORGEVAL (FR); ROCQ, Gaetan, 78125 LA BOISSIERE ECOLE (FR)
(74) Mandataire: PSIP
(86) Numéro de dépôt international: PCT/FR2024/050035
(87) Numéro de publication internationale: WO 2024/170832

(56) Documents cités:
- WO-A1-2018/162812
- DE-A1- 102012 007 322
- US-A1- 2017 246 948

## Description

La présente invention concerne de manière générale le domaine des groupes motopropulseurs hydrides de type thermique-électrique pour les véhicules automobiles. Plus particulièrement, l'invention se rapporte à un procédé de commande de démarrage d'un moteur thermique dans un véhicule équipé d'un système de transmission hybride.

Dans les véhicules hybrides, les systèmes de transmission hybride à double embrayage, dit « eDCT » pour « electric Dual Clutch Transmission » en anglais, contribuent à l'optimisation du rendement énergétique, pour une diminution de la consommation et des rejets polluants. Les systèmes de transmission « eDCT » procurent de nombreux avantages, notamment en termes de poids, de compacité, de flexibilité de la gestion énergétique et autres. Ils sont applicables dans différentes architectures connues de groupes motopropulseurs, comme l'architecture d'hybride léger, dite « mild-hybrid » ou « MHEV » pour « Mild Hybrid Electric Vehicle » en anglais, l'architecture d'hybride complet, dite « full-hybrid » ou « (F)HEV » pour « (Full) Hybrid Electric Vehicle » en anglais, et l'architecture d'hybride rechargeable dite « plug-in hybrid » ou « PHEV » pour « Plug-in Hybrid Electric Vehicle » en anglais.

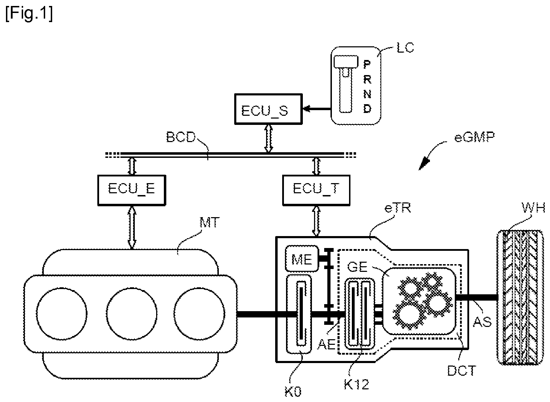

La Fig.1 illustre schématiquement un groupe motopropulseur hybride eGMP d'un véhicule hybride électrique. Le véhicule considéré est ici de type MHEV, par exemple, et intègre trois modes de traction, à savoir, un mode de traction thermique, un mode de traction électrique et un mode de traction hybride.

Le groupe eGMP comprend un moteur thermique MT et un système de transmission de type « eDCT » repéré eTR. Le système de transmission eTR est équipé d'une boite de vitesses robotisée à double embrayage DCT, d'une machine électrique tournante ME et d'un dispositif d'embrayage K0.

La boite de vitesses DCT comprend classiquement un dispositif de double embrayage K12 et des trains d'engrenages GE, ainsi que des actionneurs et synchroniseurs (non représentés) pour le passage robotisé des rapports de transmission. La boite de vitesses DCT reçoit un couple mécanique de traction via son arbre d'entrée AE pour l'entraînement en rotation des roues WH du véhicule couplées à son arbre de sortie AS.

La machine électrique tournante ME est couplée mécaniquement par engrenage à l'arbre d'entrée AE de la boite de vitesses DCT selon une architecture dite « P2 ». La machine ME est connectée à un stockeur électrique de traction (non représentée) du véhicule via un convertisseur électrique de puissance réversible (non représenté). La machine ME fonctionne en mode moteur électrique pour la traction électrique du véhicule et le démarrage du moteur thermique MT et en mode génératrice électrique pour la génération d'énergie électrique via un entraînement par le moteur thermique MT et pour le freinage récupératif.

Le dispositif d'embrayage K0 remplit une fonction de couplage/découplage dans la transmission du couple mécanique entre le moteur thermique MT et le système de transmission eTR. Ainsi, avec le dispositif d'embrayage K0 ouvert, le moteur thermique MT est déconnecté de la chaîne de traction, ce qui permet dans le mode de traction électrique par la machine ME, ainsi que dans le mode de freinage récupératif, de s'affranchir des pertes par frottement dues au moteur thermique MT, pour un meilleur rendement énergétique. Avec le dispositif de double embrayage K12 ouvert et le dispositif d'embrayage K0 fermé, la machine ME est déconnectée de la transmission vers les roues WH et est seulement en prise avec le moteur thermique MT, ce qui permet le démarrage du moteur thermique MT avec la machine ME en mode moteur et la génération d'énergie électrique par entraînement par le moteur thermique MT de la machine ME en mode génératrice.

Les différents modes de fonctionnement et phases de vie du groupe motopropulseur hybride eGMP sont gérés par un calculateur superviseur ECU_S, un calculateur de contrôle moteur ECU_E et un calculateur de contrôle de transmission ECU_T qui sont reliés à un bus de communication de données BCD, typiquement de type « CAN ». Le calculateur superviseur ECU_S est chargé de la gestion globale du groupe eGMP, les calculateurs ECU_E et ECU_T étant eux chargés de la gestion rapprochée du moteur thermique ME et du système de transmission eTR, respectivement. Les calculateurs ECU_S, ECU_E et ECU_T collaborent entre eux pour la mise en œuvre de différentes stratégies de commande en fonction des actions du conducteur du véhicule et des situations de vie.

A travers le bus de communication de données BCD, le calculateur superviseur ECU_S reçoit des commandes du conducteur à travers notamment d'un levier de commande LC manipulé par celui-ci, des informations provenant des calculateurs du véhicule et/ou des informations provenant de différents capteurs, et transmets des informations et commandes aux calculateurs ECU_E et ECU_T pour la commande du groupe motopropulseur eGMP.

Dans cette architecture de groupe motopropulseur eGMP, le démarrage ou redémarrage du moteur thermique MT en cours de roulage du véhicule est réalisé à l'aide de la machine électrique tournante ME, qui est couplée mécaniquement au moteur thermique ME via le dispositif d'embrayage K0. Il est souhaitable que ce démarrage soit réalisé en un temps très court, typiquement en quelques centaines de millisecondes, pour une disponibilité rapide du couple moteur thermique et une transition fluide du mode de traction, ainsi que pour le confort des utilisateurs du véhicule. Pour cela, la machine électrique ME en mode moteur et le dispositif d'embrayage K0 doivent appliquer un couple de démarrage important au moteur thermique MT et il en résulte un gradient de régime très élevé qui peut dépasser les 18000 tr/min/s, ou 18000 rpm/s (« rpm » pour « revolution per minute » en anglais). Pendant le démarrage du moteur thermique, la lubrification de celui-ci n'est pas complètement opérationnelle. Un gradient de régime trop élevé génère un risque de dommages occasionnés au moteur thermique. Dans l'état de la technique, cette situation de vie du démarrage du moteur thermique MT en cours de roulage du véhicule n'est pas optimisée. Le concepteur a le choix entre limiter le couple de démarrage appliqué en prenant une marge de sécurité, au détriment de la durée d'exécution du démarrage, ou violer les limitations sur le régime, avec des conséquences négatives sur la durée de vie du moteur.

Le document DE102012009481A1 décrit une commande de redémarrage d'un moteur thermique dans un groupe motopropulseur hybride. La commande de redémarrage comprend plusieurs phases, avec une augmentation progressive par palier du couple. Les différentes phases de la commande prennent en compte la lubrification du moteur thermique.

L'état de la technique est également connu du document WO 2018/162812 A1.

Il est souhaitable de fournir une solution de commande optimisée pour le démarrage du moteur thermique en cours de roulage d'un véhicule hybride, en particulier de type MHEV, permettant de minimiser la durée du démarrage et de respecter la contrainte de limitation du gradient de régime moteur.

Selon un premier aspect, l'invention concerne un procédé de commande de démarrage d'un moteur thermique mis en œuvre dans un véhicule hybride électrique ayant un groupe motopropulseur comprenant le moteur thermique et un système de transmission hybride, le système de transmission hybride ayant une machine électrique tournante couplée au moteur thermique via un dispositif d'embrayage. Conformément à l'invention, le procédé comprend, lors d'une phase de démarrage par la machine électrique tournante du moteur thermique en cours de roulage du véhicule, une commande du dispositif d'embrayage au moyen d'une consigne de couple d'embrayage maximum qui est déterminée en fonction d'un gradient de régime moteur maximum prédéterminé du moteur thermique et d'un moment d'inertie du moteur thermique, et une commande du moteur thermique au moyen d'une consigne de couple de moteur thermique maximum qui est déterminée en fonction d'un écart entre la consigne de couple d'embrayage maximum et un couple transmis par le dispositif d'embrayage.

Selon une caractéristique particulière, le couple transmis par le dispositif d'embrayage est obtenu par estimation.

L'invention concerne aussi un calculateur comportant une mémoire stockant des instructions de programme pour la mise en œuvre du procédé décrit brièvement ci-dessus. Ce calculateur est par exemple un calculateur de contrôle moteur du véhicule.

L'invention concerne aussi un véhicule hybride électrique ayant un groupe motopropulseur comprenant un moteur thermique et un système de transmission hybride, le système de transmission hybride ayant une machine électrique tournante couplée au moteur thermique via un dispositif d'embrayage, le groupe motopropulseur ayant une phase de démarrage par la machine électrique tournante du moteur thermique en cours de roulage du véhicule. Conformément à l'invention, le procédé comprend un calculateur comme indiqué ci-dessus assurant la commande de la phase de démarrage.

Selon une forme de réalisation particulière, le système de transmission hybride du véhicule hybride électrique comprend une boîte de vitesses à double embrayage.

D'autres avantages et caractéristiques de la présente invention apparaîtront plus clairement à la lecture de la description détaillée ci-dessous de plusieurs modes de réalisation particuliers de l'invention, en référence aux dessins annexés, dans lesquels :
[Fig.1] La Fig.1 est un bloc-diagramme montrant schématiquement une architecture d'un groupe motopropulseur de véhicule hybride électrique équipé d'un système de transmission hybride à double embrayage.
[Fig.2] La Fig.2 est un bloc-diagramme fonctionnel montrant une mise en œuvre du procédé de l'invention dans le groupe motopropulseur de la Fig.1.
[Fig.3] La Fig.3 représente différentes courbes montrant le bénéfice apporté par la mise en œuvre du procédé de l'invention dans le groupe motopropulseur de la Fig.1.

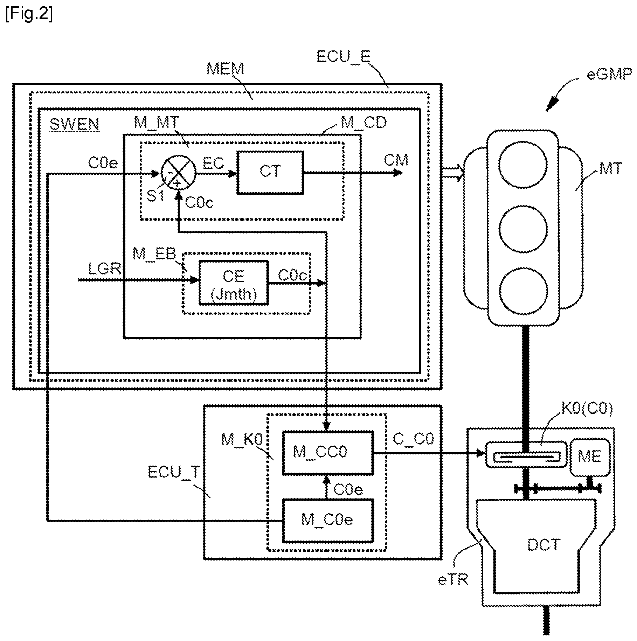

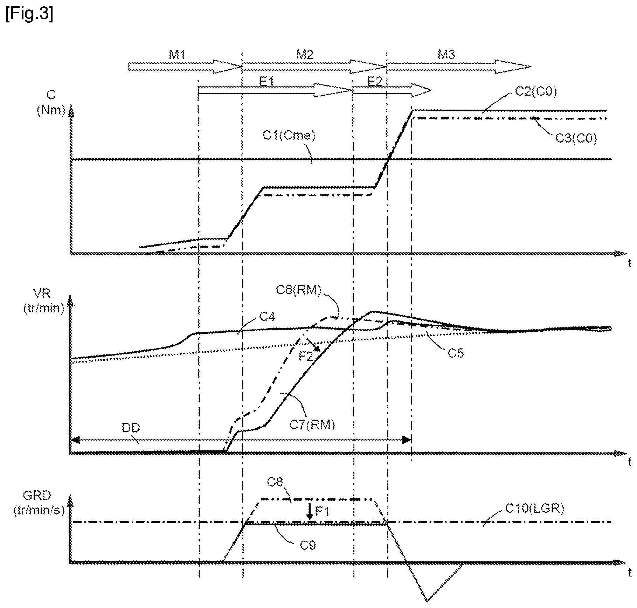

En référence à la Fig.2 et à la Fig.3, il est maintenant décrit un mode de réalisation particulier du procédé selon l'invention. Le procédé est ici mis en œuvre dans un groupe motopropulseur hybride, comme le groupe eGMP de la Fig.1, comprenant un moteur thermique et un système de transmission hybride à double embrayage de type « eDCT » désignés respectivement par leurs repères MT et eTR.

De manière générale, le procédé selon l'invention exploite les relations connues ci-dessous (1) et (2) pour lier le gradient de régime moteur (exprimé en rpm.s⁻¹) au couple moteur thermique (exprimé en N.m), connaissant le moment d'inertie (exprimé en kg.m²) du moteur thermique, à savoir :
$Co = \left(J.dω/dt\right) ,$ dans laquelle Co est le couple (en N.m), J est le moment d'inertie (en kg.m²), ω est la vitesse angulaire (en rd.s⁻¹) et dω/dt est l'accélération angulaire (en rd.s⁻²⁾ ; et
$1 rpm = 120 π rd . {s}^{- 1} .$

Le procédé selon l'invention comprend une phase d'essai préalable sur le moteur thermique MT et une phase d'exploitation du procédé pour le démarrage du moteur thermique MT en cours de roulage du véhicule.

La phase d'essai préalable a pour objectif de déterminer, avec une commande en boucle ouverte, un gradient de régime moteur maximum LGR, c'est-à-dire, un gradient de régime moteur proche d'une limite organique du moteur thermique MT, mais qui reste inférieur à celle-ci. Le gradient de régime moteur maximum LGR déterminé est stocké en mémoire, par exemple ici dans le calculateur de contrôle moteur ECU_E, pour être exploité par la suite pour le pilotage du démarrage du moteur thermique MT en cours de roulage du véhicule.

En phase d'exploitation du procédé, pour le démarrage du moteur thermique MT, la machine électrique tournante ME fournit au dispositif d'embrayage K0 un couple moteur électrique Cme. Typiquement, le couple moteur électrique Cme a une valeur constante pendant la durée du démarrage. Conformément à l'invention, le dispositif d'embrayage K0 est commandé avec une consigne de couple d'embrayage maximum C0c qui est déterminée par le gradient de régime moteur maximum LGR et le moment d'inertie du moteur thermique et le moteur thermique MT est commandé avec une consigne de couple moteur maximum CM qui est fonction d'un écart EC entre le gradient de régime moteur maximum LGR et un gradient de régime moteur mesuré et d'un couple d'embrayage C0e qui est une estimation du couple C0 effectivement transmis par le dispositif d'embrayage K0.

En référence plus particulièrement à la Fig.2, un système logiciel embarqué de commande de moteur thermique SWEN est hébergé typiquement dans le calculateur de contrôle moteur ECU_E dédié à la gestion du moteur thermique MT.

Le système logiciel embarqué de commande de moteur thermique SWEN est implanté dans une mémoire MEM du calculateur ECU_E. Le système logiciel SWEN comprend plusieurs modules logiciels dédiés à la mise en œuvre de différentes stratégies de commande du moteur thermique MT qui sont activées en fonction des situations de vie du véhicule. Le système logiciel SWEN comprend notamment un module logiciel M_CD ayant à charge la gestion du démarrage du moteur thermique MT conformément à l'invention.

Le module logiciel M_CD autorise la mise en œuvre du procédé selon l'invention par l'exécution d'instructions de code de programme par un processeur (non représenté) du calculateur ECU_E. Le calculateur ECU_E, sous la supervision du module logiciel M_CD, coopère notamment avec le calculateur superviseur ECU_S et le calculateur de contrôle de transmission ECU_T pour la mise en œuvre du procédé selon l'invention.

Comme visible à la Fig.2, le module logiciel M_CD comprend notamment deux blocs fonctionnels M_EB et M_MT.

Le bloc fonctionnel M_EB est chargé de déterminer la consigne de couple d'embrayage maximum C0c pour la commande du dispositif d'embrayage K0 et comprend essentiellement une fonction CE. La fonction CE est une fonction de calcul qui détermine la consigne de couple d'embrayage maximum C0c à fournir au dispositif d'embrayage K0 à partir du gradient de régime moteur maximum LGR susmentionné et du moment d'inertie Jmth du moteur thermique. La fonction CE exploite notamment les relations générales (1) et (2) susmentionnées pour déterminer la consigne de couple d'embrayage maximum C0c.

La consigne de couple d'embrayage maximum C0c est fournie au calculateur de contrôle de transmission ECU_T pour la commande du dispositif d'embrayage K0. Le calculateur ECU_T héberge en mémoire un bloc fonctionnel M_K0 chargé de la commande du dispositif d'embrayage K0 et comprenant notamment une fonction de commande M_CC0 et une fonction d'estimation M_C0e. La fonction M_CC0 reçoit en entrée la consigne de couple d'embrayage maximum C0c et une estimation de couple C0e fournie par la fonction d'estimation M_C0e. Le couple C0e est une estimation du couple d'embrayage C0 effectif fourni au moteur thermique MT par le dispositif d'embrayage K0. La fonction M_CC0 délivre en sortie une commande asservie C_C0. La commande asservie C_C0 pilote le dispositif d'embrayage K0 pour la fourniture du couple C0 voulu.

Le bloc fonctionnel M_MT du module logiciel M_CD est chargé de déterminer la consigne de couple de moteur thermique maximum CM pour la commande du moteur thermique MT. Le bloc fonctionnel M_MT comprend notamment des fonctions S1 et CT.

La fonction S1 est un opérateur de soustraction qui fournit un écart EC entre la consigne de couple d'embrayage maximum C0c et le couple d'embrayage C0 effectif fourni par le dispositif d'embrayage K0, le couple C0 étant représenté ici par son estimation C0e. L'écart de couple EC est fourni en entrée à la fonction CT.

La fonction CT est une fonction de régulation qui détermine la consigne de couple de moteur thermique maximum CM en fonction de l'écart de couple EC, en appliquant si nécessaire des traitements d'ajustement de gain et de correction de phase.

L'apport du procédé de l'invention, comparativement à la technique antérieure, pour le démarrage en cours de roulage du moteur thermique MT est illustré par les courbes de la Fig.3.

Le démarrage comporte différentes phases, pour le moteur thermique MT et pour le dispositif d'embrayage K0, qui sont désignées M1 à M3 et E1 et E2. Les phases M1, M2 et M3 correspondent respectivement à une phase de lancement de démarrage, une phase de montée en régime et une phase de transfert de couple. Les phases E1 et E2 correspondent respectivement à une phase de glissement d'embrayage et une phase de fermeture d'embrayage.

Les courbes C1, C2 et C3 montrent des évolutions de couples (C) pendant le démarrage, à savoir, le couple constant Cme fourni par la machine électrique tournante ME et le couple C0 transmis via le dispositif d'embrayage K0. Les courbes C2 et C3 montrent les couples C0 pour un démarrage selon la technique antérieure et un démarrage selon l'invention, respectivement. Les courbes C4 et C5 montrent des évolutions de vitesses de rotation (VR) pendant le démarrage, à savoir, la vitesse de rotation de la machine électrique tournante ME et la vitesse de rotation de l'arbre de transmission primaire, respectivement. Les courbes C6 et C7 montrent des évolutions des régimes RM du moteur thermique pour un démarrage selon la technique antérieure et pour un démarrage selon l'invention, respectivement. Les courbes C8 et C9 montrent des évolutions de gradient de régime moteur (GRD) pendant le démarrage, à savoir, des gradients de régime moteur pour un démarrage selon la technique antérieure et pour un démarrage selon l'invention, respectivement. La droite C10 représente la limite correspondant au gradient de régime moteur maximum LGR.

L'action du procédé de l'invention sur le gradient de régime moteur et sur l'évolution C7 du régime moteur RM est représentée schématiquement par les flèches F1 et F2. Avec le procédé de l'invention, la courbe de gradient C9 correspondante reste sous la limite fixée de gradient de régime moteur maximum LGR. Comparativement à la technique antérieure (courbe C6) qui accepte un gradient de régime moteur bien supérieur à LGR pour obtenir une durée de démarrage courte DD, le procédé selon l'invention (courbe C7) permet d'obtenir une durée de démarrage sensiblement équivalente en respectant la limite LGR.

La présente invention procure une solution à faible coût, basée sur du logiciel, pour optimiser le démarrage en cours de roulage du moteur thermique dans un véhicule hybride. La solution proposée est adaptée notamment pour les véhicules hybrides électriques de type « MHEV ».

L'invention ne se limite pas aux modes de réalisation particuliers qui ont été décrits ici à titre d'exemple. L'homme du métier, selon les applications de l'invention, pourra apporter différentes modifications et variantes entrant dans le champ de protection de l'invention.

## Revendications

1. Procédé de commande de démarrage d'un moteur thermique (MT) mis en œuvre dans un véhicule hybride électrique ayant un groupe motopropulseur (eGMP) comprenant ledit moteur thermique (MT) et un système de transmission hybride (eTR), ledit système de transmission hybride (eTR) ayant une machine électrique tournante (ME) couplée audit moteur thermique (MT) via un dispositif d'embrayage (K0), le procédé comprenant, lors d'une phase de démarrage par ladite machine électrique tournante (ME) dudit moteur thermique (MT) en cours de roulage dudit véhicule, une commande (M_EB) dudit dispositif d'embrayage (K0) au moyen d'une consigne de couple d'embrayage maximum (C0c) qui est déterminée en fonction d'un gradient de régime moteur maximum prédéterminé (LGR) dudit moteur thermique (MT) et d'un moment d'inertie (Jmth) dudit moteur thermique (MT), **caractérisé en ce qu'**il comprend également une commande (M_MT) dudit moteur thermique (MT) au moyen d'une consigne de couple de moteur thermique maximum (CM) qui est déterminée en fonction d'un écart (EC) entre ladite consigne de couple d'embrayage maximum et un couple (C0e) transmis par ledit dispositif d'embrayage (K0).

2. Procédé selon la revendication 1, **caractérisé en ce que** ledit couple transmis par ledit dispositif d'embrayage (K0) est obtenu par estimation (C0e).

3. Calculateur comportant une mémoire (MEM) stockant des instructions de programme (M_CD) pour la mise en œuvre du procédé selon la revendication 1 ou 2.

4. Calculateur selon la revendication 3, **caractérisé en ce que** ledit calculateur est un calculateur de contrôle moteur (ECU_E).

5. Véhicule hybride électrique ayant un groupe motopropulseur (eGMP) comprenant un moteur thermique (MT) et un système de transmission hybride (eTR), ledit système de transmission hybride (eTR) ayant une machine électrique tournante (ME) couplée audit moteur thermique (MT) via un dispositif d'embrayage (K0), ledit groupe motopropulseur (eGMP) ayant une phase de démarrage par ladite machine électrique tournante (ME) dudit moteur thermique (MT) en cours de roulage dudit véhicule, **caractérisé en ce qu'**il comprend un calculateur (ECU_E) selon la revendication 3 ou 4 assurant la commande de ladite phase de démarrage.

6. Véhicule hybride électrique selon la revendication 5, **caractérisé en ce que** ledit système de transmission hybride (eTR) comprend une boîte de vitesses à double embrayage (DCT).

## Patentansprüche

1. Verfahren zur Steuerung des Startens eines Verbrennungsmotors (MT), der in einem elektrischen Hybridfahrzeug mit einem Antriebsstrang (eGMP) ausgeführt wird, der den Verbrennungsmotor (MT) und ein Hybridgetriebesystem (eTR) umfasst, wobei das Hybridgetriebesystem (eTR) eine rotierende elektrische Maschine (ME) aufweist, die mit dem Verbrennungsmotor (MT) über eine Kupplungsvorrichtung (K0) gekoppelt ist, wobei das Verfahren während einer Startphase durch die rotierende elektrische Maschine (ME) des Verbrennungsmotors (MT) während des Fahrens des Fahrzeugs eine Steuerung (M_EB) der Kupplungsvorrichtung (K0) mittels einer Sollwert für das maximale Kupplungsmoment (C0c), der in Abhängigkeit von einem vorbestimmten maximalen Motordrehzahlgradienten (LGR) des Verbrennungsmotors (MT) und einem Trägheitsmoment (Jmth) des Verbrennungsmotors (MT) bestimmt wird, **dadurch gekennzeichnet, dass** er auch eine Steuerung (M_MT) des Verbrennungsmotors (MT) mittels eines Sollwerts für das maximale Kupplungsdrehmoment (CM) umfasst, der in Abhängigkeit von einer Abweichung (EC) zwischen dem Sollwert für das maximale Kupplungsmoment und einem Drehmoment (C0e), das von der Kupplungsvorrichtung (K0) übertragen wird, bestimmt wird.

2. Verfahren nach Anspruch 1, **dadurch gekennzeichnet, dass** das von der Kupplungseinrichtung (K0) übertragene Drehmoment durch Schätzung (C0e) erhalten wird.

3. Rechner mit einem Speicher (MEM), der Programmbefehle (M_CD) zur Durchführung des Verfahrens nach Anspruch 1 oder 2 speichert.

4. Rechner nach Anspruch 3, **dadurch gekennzeichnet, dass** der Rechner ein Motorsteuerrechner (ECU_E) ist.

5. Elektrisches Hybridfahrzeug mit einer Antriebseinheit (eGMP), die einen Verbrennungsmotor (MT) und ein Hybridgetriebesystem (eTR) umfasst, wobei das Hybridgetriebesystem (eTR) eine rotierende elektrische Maschine (ME) aufweist, die mit dem Verbrennungsmotor (MT) über eine Kupplungsvorrichtung (K0) gekoppelt ist, wobei die Antriebseinheit (eGMP) eine Startphase durch die rotierende elektrische Maschine (ME) des Verbrennungsmotors (MT) während des Fahrens des Fahrzeugs aufweist, **dadurch gekennzeichnet, dass** sie einen Rechner (ECU_E) nach Anspruch 3 oder 4 umfasst, der die Startphase steuert.

6. Elektrisches Hybridfahrzeug nach Anspruch 5, **dadurch gekennzeichnet, dass** das Hybridgetriebesystem (eTR) ein Doppelkupplungsgetriebe (DCT) umfasst.

## Claims

1. Method for controlling the starting of an internal combustion engine (MT) which is carried out in an electric hybrid vehicle having a drive train (eGMP) which comprises the internal combustion engine (MT) and a hybrid transmission system (eTR), the hybrid transmission system (eTR) having a rotating electrical machine (ME) which is coupled to the internal combustion engine (MT) via a coupling device (K0), the method comprising, during a starting phase by the rotating electrical machine (ME) of the internal combustion engine (MT) during the driving of the vehicle, controlling (M_EB) the coupling device (K0) by means of a desired value for the maximum coupling torque (C0c) which is dependent on a predetermined maximum engine speed gradient (LGR) of the internal combustion engine (MT) and an inertia (Jmth) of the internal combustion engine is determined, **characterised in that** it also comprises a control (M_MT) of the internal combustion engine (MT) by means of a desired value for the maximum clutch torque (CM), which is determined as a function of a deviation (EC) between the desired value for the maximum clutch torque and a torque (C0e), which is transmitted by the clutch device (K0).

2. Method according to Claim 1, **characterised in that** the torque transmitted by the clutch device (K0) is obtained by estimation (C0e).

3. Computer with a memory (MEM) which stores programme instructions (M_CD) for carrying out the method according to Claim 1 or 2.

4. Computer according to Claim 3, **characterised in that** the computer is a motor control computer (ECU_E).

5. Electric hybrid vehicle with a drive unit (eGMP) comprising an internal combustion engine (MT) and a hybrid transmission system (eTR), the hybrid transmission system (eTR) having a rotating electric machine (ME) coupled to the internal combustion engine (MT) via a coupling device (K0), the drive unit (eGMP) having a starting phase by the rotating electric machine (ME) of the internal combustion engine (MT) during driving of the vehicle, **characterised in that** it comprises a computer (ECU_E) according to Claim 3 or 4, which controls the starting phase.

6. Electric hybrid vehicle according to Claim 5, **characterised in that** the hybrid transmission system (eTR) comprises a double-clutch transmission (DCT).
